# EUROPEAN PATENT APPLICATION

(11) **EP 4 129 100 A1**
(43) Date of publication of application: **08.02.2023**
(21) Application number: 21933635.1
(22) Date of filing: 30.03.2021
(51) Int. Cl.: A24F 47/00

(54) **ATOMIZER AND ATOMIZING ASSEMBLY THEREOF**

(71) Applicant: Shenzhen Huachengda Development Co., Ltd., Shenzhen, Guangdong 518000 (CN)
(72) Inventor: WANG, Xiaodie, Shenzhen, Guangdong 518000 (CN)
(74) Representative: Westphal, Mussgnug & Partner, Patentanwälte mbB
(86) International application number: PCT/CN2021/084021
(87) International publication number: WO 2022/204952

(57) **Abstract**

The present invention discloses an atomizer and an atomizing assembly thereof. The atomizing assembly includes an atomizing body made of a porous liquid conducting material; the atomizing body includes an air passage and a liquid inlet groove; the air passage at least includes a first passage communicated with a bottom of the atomizing body and at least one second passage communicated with the first passage, a first included angle is formed between the second passage and the first passage; the liquid inlet groove is spaced from the air passage; the atomizing assembly further includes a heating member configured for heating and atomizing the e-liquid, and the heating member forms an atomizing area in the first passage. By providing the first passage and the second passage which form a certain included angle with each other, during the upward transmission of the atomized e-liquid, the incompletely atomized e-liquid will contact the sidewall of the air passage under the action of gravity when passing through the second passage, and will be readsorbed by the atomizing body, so as to conduct secondary atomization and reduce the phenomenon of insufficient e-liquid atomization, thereby avoiding the user from inhaling the incompletely atomized e-liquid and the condensate.

## Description

### FIELD

The present invention relates to the technical field of electronic cigarette sets, and more specifically, to an atomizer and an atomizing assembly thereof.

### BACKGROUND

Currently, the atomizers made of porous material in the market are usually ceramic atomizers, including a cylindrical ceramic atomizer and a square flat ceramic atomizer. Wherein, the cylindrical ceramic atomizer is in linear communication with the inlet and outlet air holes in a straight line, and the moisture contained in the smoke atomized by the cylindrical ceramic atomizer will be directly inhaled into the user's mouth, making the user experience poor. Besides, the cylindrical ceramic atomizer has a small application range and s single application scene. Moreover, due to that a wrapping cotton is needed, the wrapping cotton is slow in production speed and unstable in quality during the assembly process. While in the square flat atomizer, the heating wire can only be heated outside or at the bottom of the atomizer due to the limitation of the production process of the heating wire, and due to the limitation of the process, the resistance deviation of the heating wire is too large, and the quality of the finished product is unstable, which easily leads to an uneven heating, a core burning, an open circuit without resistance, and other phenomena.

### SUMMARY

A technical problem to be solved by the present invention is, in view of the above defects in the prior art, to provide an atomizer and an atomizing assembly thereof.

A technical solution adopted by the present invention to solve the technical problem is to provide:
an atomizing assembly, including an atomizing body made of a porous liquid conducting material; wherein the atomizing body includes an air passage configured for airflow to pass through, and a liquid inlet groove configured for storing an e-liquid and feeding the e-liquid;
wherein, the air passage at least includes a first passage communicated with a bottom of the atomizing body and at least one second passage communicated with the first passage, wherein a first included angle is formed between the second passage and the first passage, and the first included angle is larger than 0 ° and less than 180 °;
the liquid inlet groove is spaced from the air passage; and
the atomizing assembly further includes a heating member configured for heating and atomizing the e-liquid, and the heating member forms an atomizing area in the first passage.

Preferably, the first passage is perpendicular to a bottom surface of the atomizing body, the first included angle between the second passage and the first passage is 90 °, and the liquid inlet direction of the e-liquid in the liquid inlet groove is perpendicular to the second passage.

Preferably, the liquid inlet groove is communicated with a lateral surface of the atomizing body; or
the liquid inlet groove is communicated with a top surface of the atomizing body.

Preferably, the liquid inlet groove is in parallel with the first passage, and the second passage is communicated with the lateral surface of the atomizing body.

Preferably, the liquid inlet groove is perpendicular to the first passage, and the second passage is communicated with the top surface of the atomizing body.

Preferably, the second passage includes at least two airways that are mutually communicated, a second included angle is formed between two adjacent airways, and the second included angle is larger than 0 ° and less than 180 °, and at least one of the airways is communicated with the top surface of the atomizing body.

Preferably, the second included angle between the at least two airways is 90 °.

Preferably, the heating member includes a heating element and a pin electrically connected with the heating element, the heating element is fixed in the first passage, and the pin extends from the first passage to the outside of the atomizing body.

The present invention provides an atomizer, including the atomizing assembly of any one of the above, and further including a liquid cup, and a mounting seat configured for positioning the atomizing assembly in the liquid cup; wherein the mounting seat is detachably connected with the liquid cup;
wherein, the liquid cup includes a suction passage communicated with the air passage, a cavity configured for receiving the atomizing assembly and the mounting seat, and a liquid storage chamber configured for storing the e-liquid, and the suction passage is isolated from the liquid storage chamber.

Preferably, the mounting seat includes a bottom bracket and an upper bracket, the atomizing assembly is arranged between the bottom bracket and the upper bracket, and the upper bracket includes at least one sealing member through which the liquid storage chamber is sealed circumferentially.

Preferably, the upper bracket is provided with at least one liquid passage corresponding to the liquid inlet groove, and the liquid storage chamber is communicated with the liquid inlet groove through the liquid passage.

Preferably, the upper bracket is further provided with at least one air guiding passage for the airflow to pass through, and the air guiding passage communicates the suction passage with the air passage.

Preferably, the liquid inlet groove is communicated with a top surface of the atomizing body, the upper bracket includes an upper cover connected with the bottom bracket, a first sealing member arranged between the upper cover and the atomizing body, and a second sealing member arranged between the upper cover and the liquid cup;
the first sealing member is provided with a first liquid through hole for the e-liquid to pass through, and a first air through hole for the airflow to pass through, the first liquid through hole is communicated with a top surface of the first sealing member, and is disposed corresponding to the liquid inlet groove; and
the first air through hole is disposed on a lateral surface of the first sealing member, and disposed corresponding to the second passage.

Preferably, the upper cover is sleeved on the first sealing member and detachably connected with the bottom bracket;
the upper cover is provided with a second liquid through hole corresponding to the first liquid through hole, and the second liquid through hole penetrates the upper cover along the axial direction;
the upper cover is further provided with a second air through hole corresponding to the first air through hole, and a third air through hole arranged above the second air through hole and coaxial with the suction passage, one end of the third air through hole is communicated with the top surface of the upper cover, and another end of the third air through hole is communicated with a lateral surface of the upper cover, and the airflow enters the third air through hole along the lateral surface of the upper cover from the second air through hole.

Preferably, the second sealing member is provided with a third liquid through hole corresponding to the second liquid through hole, the first liquid through hole, the second liquid through hole and the third liquid through hole are communicated to form the liquid passage communicating the liquid storage chamber and the liquid inlet groove;
the second sealing member is further provided with a fourth air through hole corresponding to the suction passage, and the first air through hole, the second air through hole, the third air through hole and the fourth air through hole are communicated to form the air guiding passage communicating the suction passage and the air passage.

Preferably, the liquid inlet groove is communicated with the lateral surface of the atomizing body, the upper bracket includes a third sealing member and a connecting member disposed between the third sealing member and the suction passage;
the third sealing member is provided therein with a receiving cavity configured for receiving the atomizing body, and the atomizing body is arranged in the receiving cavity with a gap therebetween in the circumferential direction;
a top of the third sealing member is provided with a fourth liquid through hole communicated to the receiving cavity, and a fifth air through hole corresponding to the second passage, and the connecting member is further provided with a sixth air through hole communicating the suction passage and the fifth air through hole.

Preferably, the atomizing body is abutted against a top of the receiving cavity, and the fourth liquid through hole is at least partially communicated with the receiving cavity.

Preferably, the sixth air through hole is coaxially sleeved at a bottom of the suction passage and communicated with the fifth air through hole, and the fifth air through hole and the sixth air through hole are communicated to form the air guiding passage communicating the air passage and the suction passage.

Preferably, the atomizer further includes an electrode column electrically connected with the heating member, and the end of the electrode column that is away from the heating member penetrates the bottom bracket and is exposed to the bottom surface of the bottom bracket.

Preferably, the bottom bracket is further provided with an air inlet that allows the airflow to enter the atomizer, and the air inlet penetrates the bottom bracket along the axial direction.

Preferably, the air inlet is further provided with a filter grid for filtering impurities in the air, and the filter grid includes a plurality of through holes arranged along the axial direction.

The present invention provides at least the following beneficial effects: by providing the first passage and the second passage which form a certain included angle with each other, during the upward transmission of the atomized e-liquid, the incompletely atomized e-liquid will contact the sidewall of the air passage under the action of gravity when passing through the second passage, and will be readsorbed by the atomizing body, so as to conduct secondary atomization and reduce the phenomenon of insufficient e-liquid atomization, thereby avoiding the user from inhaling the incompletely atomized e-liquid and the condensate; meanwhile, since the heating element is an independent component and is fixed in the atomizing assembly, thereby ensuring a stable quality and a uniform heating of the heating element.

### BRIEF DESCRIPTION OF THE DRAWINGS

Subject matter of the present invention will be described in even greater detail below based on the exemplary figures. In the accompanying drawings:
Fig. 1 is a sectional view of an atomizing assembly in a first embodiment of the present invention (wherein the heating element is a heating wire or a heating metal tube);
Fig. 2 is a sectional view of the atomizing assembly in the first embodiment of the present invention (wherein the heating element is a planar heating sheet);
Fig. 3 is a structural diagram of the atomizing assembly in the first embodiment of the present invention;
Fig. 4 is a quarter sectional view of an atomizing assembly in a second embodiment of the present invention;
Fig. 5 is a structural diagram of the atomizing assembly in the second embodiment of the present invention;
Fig. 6 is an exploded sectional view of an atomizer in a first embodiment of the present invention;
Fig. 7 is a first sectional structural diagram of the atomizer in the first embodiment of the present invention;
Fig. 8 is a second sectional structural diagram of the atomizer in the first embodiment of the present invention;
Fig. 9 is an exploded sectional view of an atomizer in a second embodiment of the present invention;
Fig. 10 is a first sectional structural diagram of the atomizer in the second embodiment of the present invention; and
Fig. 11 is a second sectional structural diagram of the atomizer in the second embodiment of the present invention.

### DETAILED DESCRIPTION

For better understanding of the technical features, objects and effects of the present invention, the specific embodiments of the present invention will be described in detail with reference to the accompanying drawings.

The present invention provides an atomizer of an electronic cigarette and an atomizing assembly thereof, configured to heat an e-liquid to generate smoke, so that the purpose of simulating a real smoke can be achieved through the user's suction. Specifically, the atomizing assembly provided in the present invention may include an atomizing body 10 made of a porous liquid conducting material, which may be specifically made of a porous ceramic material or other porous material, and can fully adsorb and store the e-liquid. Specifically, the atomizing body 10 is in a shape of a cube or a flat shape similar to a cube, and its interior includes an air passage 11 and a liquid inlet groove 12. Wherein, when the user inhales, the air passage 11 is used as a flow passage for the airflow; the liquid inlet groove 12 is spaced disposed with the air passage 11, and is used store the e-liquid and to supply the e-liquid to the atomizing body 10 in real time when the user is inhaling. The atomizing assembly in the present invention further includes a heating member 20 configured to heat the e-liquid to generate smoke. With the user's suction, the smoke generated by heating and atomizing the e-liquid flows along the air passage 11, and then enters the user's mouth, so as to achieve the purpose of simulating the real smoke suction.

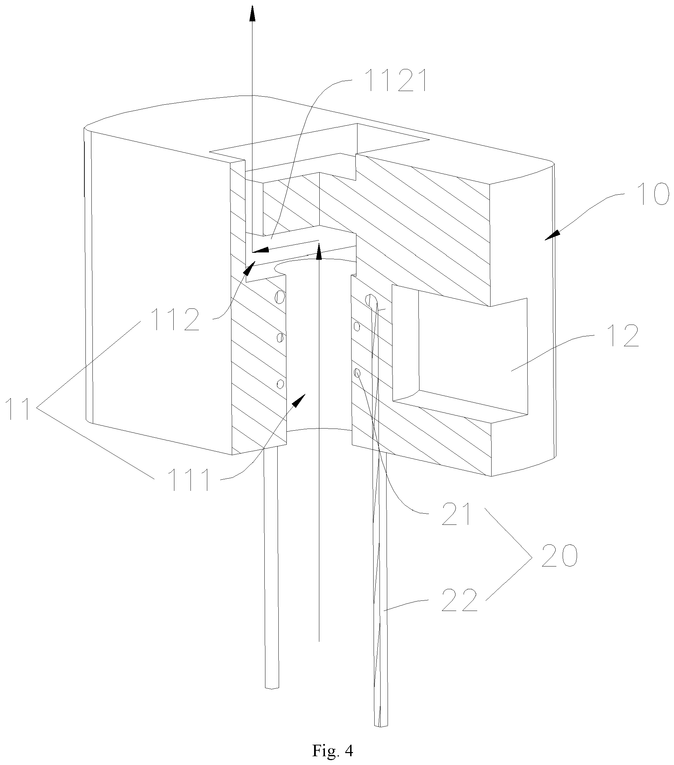

The air passage 11 of the atomizing assembly provided in the present invention is non-linear shaped, and may include, referring to Fig. 4, a first passage 111 and one or more second airways 112. The first passage 111 and the second passage 112 are communicated with each other. Wherein, the first passage 111 is usually disposed in the center of the atomizing body 10, and is communicated with the bottom surface of the atomizing body 10, so that the airflow enters the atomizing body 10 through the first passage 111. The heating member 20 is fixedly disposed in the first passage 111 to form an atomizing area in the first passage 111, which is used to heat and atomize the e-liquid to generate smoke. In some embodiments, a first included angle is formed between the first passage 111 and the second passage 112, and the first included angle is larger than 0 ° and less than 180 ° in some embodiments. That is, the second passage 112 extends from the first passage 111 in the center of the atomizing body 10 to a lateral side in a horizontal direction or a slightly inclined angle, so that when the user sucks, the airflow enters the second passage 112, which is inclined to the first passage 111, through the first passage 111. When passing through the second passage 112, the incompletely atomized e-liquid brought in the airflow and the condensed liquid will fall back and contact the side wall of the air passage 11 under the action of gravity, and will be recycled by the porous liquid adsorbing material again for secondary atomizing, thereby ensuring that the smoke inhaled by the user is dry. In a preferred embodiment of the present invention, in order to ensure that the second passage 112 can fully recover the incompletely atomized e-liquid and the condensed liquid, the first included angle is preferably 90 °, that is, the second passage 112 is perpendicular to the first passage 111.

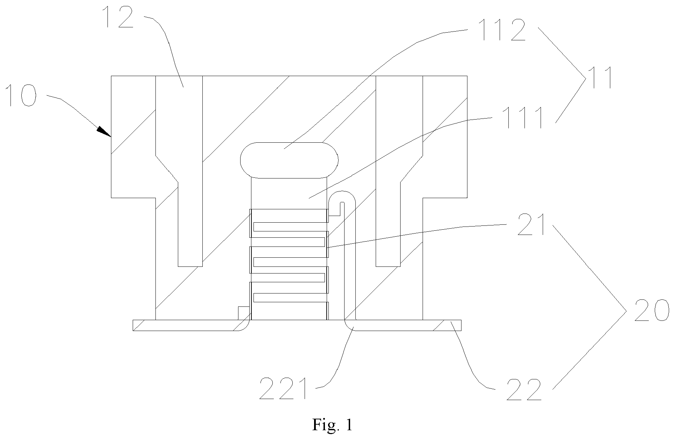

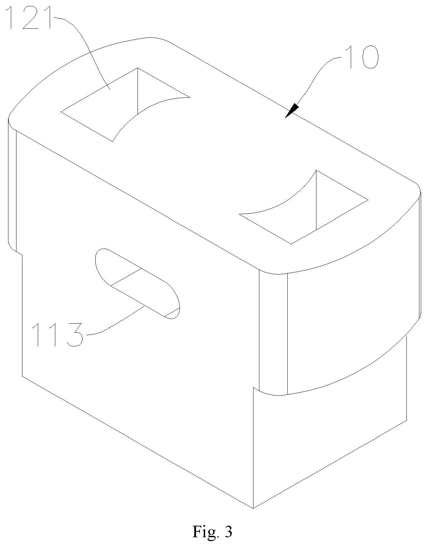

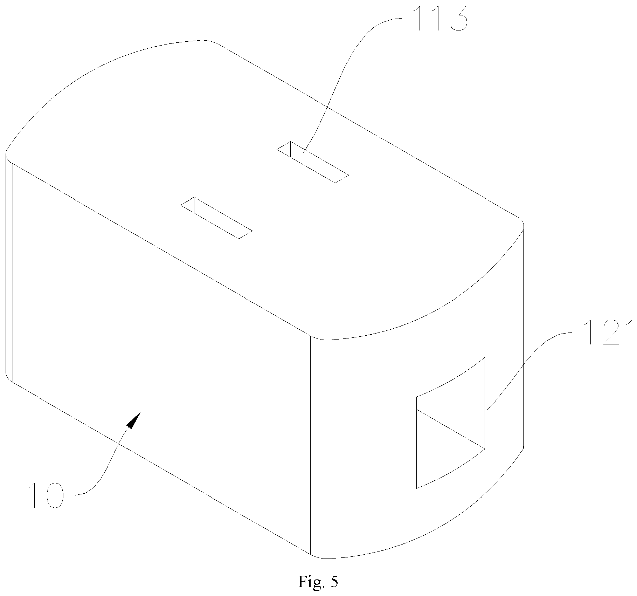

In the present invention, the liquid inlet groove 12 is arranged in the atomizing body 10 and communicated with the surface of the atomizing body 10. Further, referring to Fig. 1, the interior of the atomizing body 10 may include a plurality of liquid inlet grooves 12, which may be symmetrically arranged with respect to the first passage 111, so that the plurality of liquid inlet grooves 12 are equidistant from the first passage 111 to ensure that the e-liquid in each liquid inlet groove 12 enters the atomizing area at an equal speed, and avoid an uneven heating. In the present invention, the liquid inlet groove 12 may be communicated with the lateral side surface or the top surface of the atomizing body 10, that is, the atomizing assembly provided in the present invention may be a lateral side surface liquid inlet structure or a top surface liquid inlet structure, which is not limited herein. In the present invention, preferably, two liquid inlet grooves 12 and two second airways 112 are provided, and are symmetrically arranged in the atomizing body 10 respectively. Referring to Fig. 3 and Fig. 5, the surface of each liquid inlet groove 12 that is communicated with the atomizing body 10 forms a liquid inlet 121, the surface of each second passage 112 that is communicated with the atomizing body 10 forms an air outlet 113, and the connecting line between the two liquid inlets 121 and the connecting line between the two air outlets 113 are preferably perpendicular to each other, and arranged in a cross pattern.

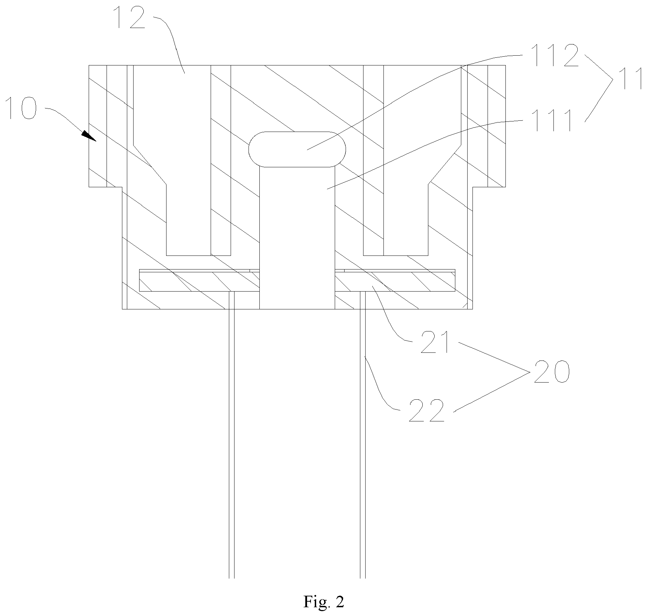

Further, the heating member 20 specifically includes a heating element 21 and a pin 22 electrically connected with the heating element 21. The heating element 21 may be a spiral or cylindrical heating wire, a cylindrical heating metal tube, or a planar heating sheet, which is not limited herein. Referring to Figs. 1 and 4, the heating element 21 is a heating wire or a heating metal tube, and may be embedded on the inner wall of the first passage 111, to form an atomizing area in the first passage 111 by heating the air in the first passage 111. Referring to Fig. 2, the heating element 21 is a planar heating plate, and is embedded in the atomizing body 10, to heat the e-liquid in the atomizing body 10. The number of the pins 22 may be two, which are respectively fixedly connected with the heating element 21 and extend from the first passage 111 to the outside of the atomizing body 10. Referring to Fig. 4, in some embodiments, the pin 22 is a linear pin, and one end of the pin 22 extends beyond the atomizing body 10. Furthermore, the pin 22 may be disposed perpendicular to the bottom surface of the atomizing body 10. In other embodiments, referring to Fig. 1, each pin 22 includes a bending portion 221. By the bending portion 221 of the extending downward pin 22, the portion of the pin 22 extending out of the atomizing body 10 is parallel to the bottom surface of the atomizing body 10, and is tightly attached to the bottom surface of the atomizing body 10, to save space and adapt to the assembly structures of different atomizers. Specifically, the bending portion 221 may be a right angle structure in some embodiments. In the present invention, the heating member 20 may be processed separately, then the processed heating member 20 is sintered and fixed with the atomizing body 10, so as to ensure the stable quality of the heating member 20, and prevent the atomizing assembly from heating unevenly and a core burning.

The atomizing assembly provided in the present invention will be further described through two specific embodiments hereinbelow.

### Embodiment one:

Referring to Figs. 1 to 3, in this embodiment, the atomizing assembly is a top liquid feeding atomizing assembly. The first passage 111 is perpendicular to the bottom surface of the atomizing body 10 and communicated with the bottom surface of the atomizing body 10. The second passage 112 is perpendicular to and communicated with the first passage 111, one end of the second passage 112 is communicated with the first passage 111, and another end of the second passage 112 is communicated with the lateral side surface of the atomizing body 10, thus forming a complete air passage with a right angle turn. In this embodiment, the liquid inlet direction of the e-liquid in the liquid inlet groove 12 is perpendicular to the second passage 112 and parallel to the first passage 111, that is, in this embodiment, the atomizing assembly is a top liquid feeding structure, the liquid inlet groove 12 is communicated with the top of the atomizing assembly, and the extending direction of the liquid inlet groove 12 is parallel to the atomizing area, so that the e-liquid can be in a full contact with the atomizing area, and the liquid inlet speed is matched with the atomizing speed, the risk of core burning and insufficient supply the e-liquid is reduced.

### Embodiment two:

Referring to Fig. 4 and Fig. 5, in this embodiment, the atomizing assembly is a lateral side liquid feeding atomizing assembly. The first passage 111 is perpendicular to the bottom surface of the atomizing body 10 and communicated with the bottom surface of the atomizing body 10. The second passage 112 includes at least two airways 1121 that are mutually communicated. A second included angle is formed between two adjacent airways 1121. The second included angle is larger than 0 ° and less than 180 ° in some embodiments. In some embodiments, a number of airways 1121 that are arranged at the second included angle are communicated sequentially to form the second passage 112. One end of the second passage 112 is communicated with the first passage 111, and another end of the second passage 112 is communicated with the top surface of the atomizing body 10. Thus, in this embodiment, the airflow enters the atomizing body 10 through the first passage 111 and then flows out from the top surface of the atomizing body 10. Furthermore, in order to ensure the recovery effect of the e-liquid and the condensate, the first included angle and the second included angle are preferably both 90 °, that is, the first passage 111 is perpendicular to its adjacent airway 1121, and the adjacent airways 1121 are also mutually perpendicular. In a specific embodiment of the present invention, the second passage 112 is composed of two airways 1121 that are mutually perpendicular and communicated, wherein, one airway 1121 is communicated with the first passage 111, and the other airway 1121 is communicated with the top surface of the atomizing body 10, thereby to form a complete air passage 11. The specific flow path of the airflow in the atomizing assembly in this embodiment is shown in the quarter sectional view in Fig. 4. In this embodiment, the liquid inlet direction of the e-liquid in the liquid inlet groove 12 is perpendicular to the second passage 112, that is, in this embodiment, the atomizing body 10 is a lateral side liquid inlet structure, and the liquid inlet groove 12 is perpendicular to the first passage 111.

In the above embodiments, the air outlet 113 at the connection between the second passage 112 and the atomizing body 10, and the liquid inlet 121 at the connection between the liquid inlet groove 12 and the atomizing body 10 are not limited in shape, which may be circular, square, triangular or any irregular shape.

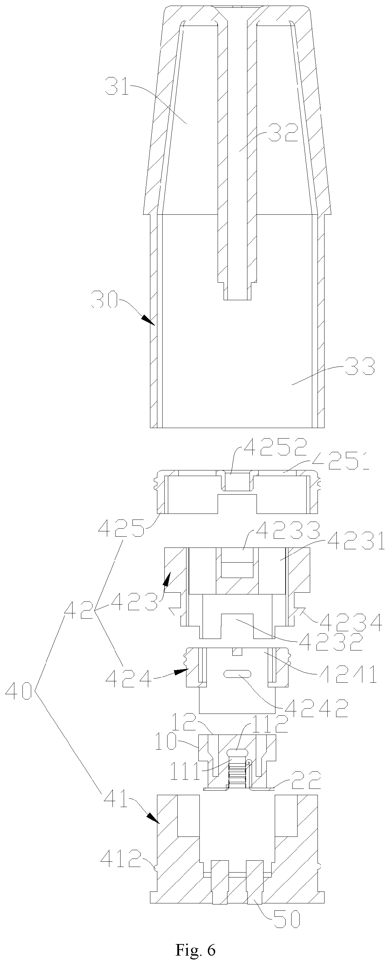

The present invention further provides an atomizer of an electronic cigarette having the above atomizing assembly. Referring to Figs. 6 to 11, the atomizer may include a liquid cup 30, the above atomizing assembly and a mounting seat 40, wherein the atomizing assembly is arranged in the liquid cup 30, and the mounting seat 40 is detachably connected with the liquid cup 30.

Further, the liquid cup 30 includes a suction passage 32 communicated with the air passage 11, a cavity 33 configured for containing the atomizing assembly and the mounting seat 40, and a liquid storage chamber 31 configured for storing the e-liquid. In some embodiments, the suction passage 32 is arranged in the center of the liquid storage chamber 31 and is isolated from the liquid storage chamber 31.

In the present invention, the mounting base 40 includes a bottom bracket 41 configured to fix the atomizing assembly in the cavity 33, and an upper bracket 42 configured to seal the liquid storage chamber 31. The atomizing assembly is arranged between the bottom bracket 41 and the upper bracket 42. The upper bracket 42 is provided with at least one sealing member configured to seal the liquid storage chamber 31 along the circumference to prevent the e-liquid in the liquid storage chamber 31 from leaking. Further, the upper bracket 42 is provided with at least one liquid guiding passage corresponding to the liquid inlet groove 12, and the liquid storage chamber 31 is communicated with the liquid inlet groove 12 through the liquid guiding passage. The upper bracket 42 is further provided with an air guiding passage for the airflow to pass therethrough, the suction passage 32 is communicated with the air passage 11 through the air guiding passage, so that when the user inhales, the atomized smoke enters the suction passage 32 through the air passage, and then enters the user's mouth.

Further, the atomizer provided in the present invention further includes an electrode column 50 electrically connected with the heating member 20, specifically, the electrode column 50 is arranged on the bottom bracket 41 and electrically connected with the heating element 21 of the heating member 20. One end of the electrode column 50 is abutted against the pin 22, so as to be electrically connected with the pin 22. Another end of the electrode column 50 runs through the bottom bracket 41 and is exposed to the bottom surface of the bottom bracket 41, so that the atomizer is electrically connected with an external power supply through the electrode column 50 when being installed on an electronic cigarette set, so that the heating member 20 is powered on, and the heating element 21 starts to heat up.

The atomizer provided in the present invention will be further described through two specific embodiments hereinbelow.

### Embodiment one:

Referring to Fig. 6 to Fig. 8, when the atomizing assembly is the top liquid feeding atomizing assembly mentioned above, the upper bracket 42 specifically includes an upper cover 423 which is connected with the bottom bracket 41, a first sealing member 424 arranged between the upper cover 423 and the atomizing body 10, and a second sealing member 425 arranged between the upper cover 423 and the liquid cup 30.

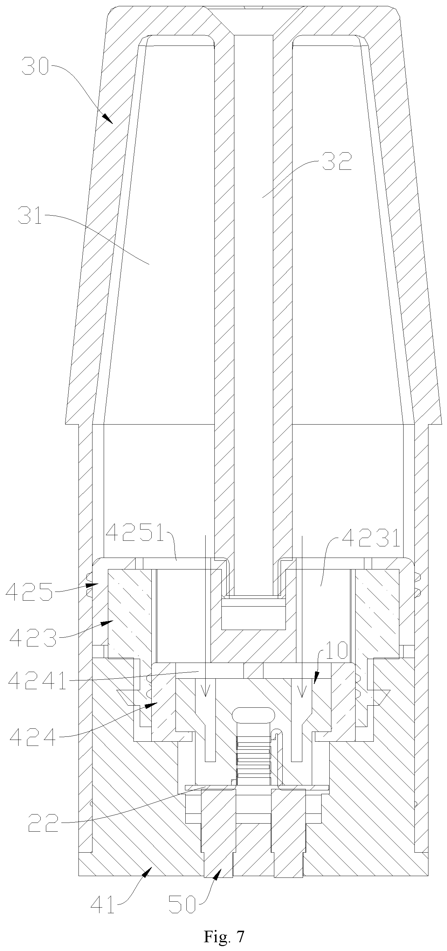

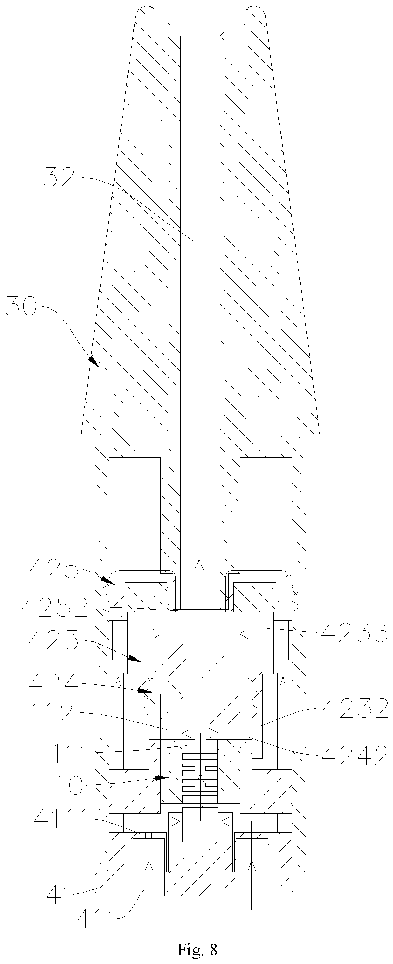

Fig. 7 and Fig. 8 show the sectional view of the atomizer in this embodiment, respectively, wherein the sections in Fig. 7 and Fig. 8 are perpendicular to each other. Wherein, the first sealing member 424 is wrapped around a side surface of the atomizing body 10, and is provided with a first liquid through hole 4241 running through a top surface of the first sealing member 424, and a first air through hole 4242 running through its lateral surface. The first liquid through hole 4241 is disposed corresponding to the liquid inlet 121, on the surface of the atomizing body 10, of the liquid inlet groove 12, and the size of the first liquid through hole 4241 is preferably larger than that of the liquid inlet 121, so that the e-liquid can enter the corresponding liquid inlet 121 through the first liquid through hole 4241. The first air through hole 4242 is disposed corresponding to the second passage 112, and the size of the first air through hole 4242 is preferably larger than that of the air outlet 113, on the surface of the atomizing body 10, of the second passage 112.

The upper cover 423 is sleeved on the first sealing member 424, and is provided with a second liquid through hole 4231 disposed corresponding to the first liquid through hole 4241, and the second liquid through hole 4231 penetrates the upper cover 423 along the axial direction. The upper cover 423 further includes a second air through hole 4232 disposed corresponding to the first air through hole 4242, and a third air through hole 4233 arranged above the second air through hole 4232 and coaxial with the suction passage 32. One end of the third air through hole 4233 is communicated with the top surface of the upper cover 423, and another end of the third air through hole 4233 is communicated with the lateral surface of the upper cover 423, and preferably, the end that is communicated with the lateral surface of upper cover 423 is arranged right above the second air through hole 4232, thus, after passing through the second air through hole 4232, the airflow can flow upward and enter into the suction passage 32 through the third air through hole 4233.

The second sealing member 425 is sleeved on the upper cover 423 to isolate the liquid storage chamber 31 from the upper cover 423 circumferentially. In this embodiment, the top of the second sealing member 425 is provided with a third liquid through hole 4251. The third liquid through hole 4251 is disposed corresponding to the second liquid through hole 4231, so that the first liquid through hole 4241, the second liquid through hole 4231 and the third liquid through hole are communicated sequentially to form the liquid passage. The arrows in Fig. 7 show the flow path of the e-liquid in the liquid passage in this embodiment, the e-liquid in the liquid storage chamber 31 enters the liquid inlet groove 12 through the liquid passage, to be absorbed by the atomizing body 10 for heating and atomizing. The second sealing member 425 is further provided with a fourth air through hole 4252 disposed corresponding to the suction passage 32, and the first air through hole 4242, the second air through hole 4232, the third air through hole 4233 and the fourth air through hole 4252 are communicated sequentially to form the air guiding passage. The dotted line arrows in Fig. 8 show the flow path of the airflow in the air guiding passage in this embodiment. Thus, the smoke atomized by the atomizing assembly leaves the atomizing body 10 through the first passage 111 and the second passage 112, enters the suction passage 32 in the liquid cup 30 through the air guiding passage, and then enters the user's mouth.

In some embodiments, the upper cover 423 is detachably connected with the bottom bracket 4141, and the liquid cup 30 is also detachably connected with the bottom bracket 41. Specifically, referring to Fig. 6, the upper cover 423 is preferably symmetrically provided with at least two bulges 4234, which are clamped with the bottom bracket 4141 to fixedly connect the upper cover 423 with the bottom bracket 41. The bottom bracket 41 is preferably provided with a number of convex points 412, through which the bottom bracket 41 is fixed in the liquid cup 30. Of course, the detachable connection manner between the upper cover 423 and the bottom bracket 41 and between the liquid cup 30 and the bottom bracket 41 is not limited thereto, and other detachable connection manner in the prior art may be used in the present invention, which may be considered as not exceeding the protection scope of the present invention. In this embodiment, the atomizing assembly and the first sealing member 424 are fixed between the upper cover 423 and the bottom bracket 41 through the detachable connection of the upper cover 423 and the bottom bracket 41, then the second sealing member 425 is sleeved outside the upper cover 423, then the atomizer is completely assembled through the detachable connection between the bottom bracket 41 and the liquid cup 30.

### Embodiment two:

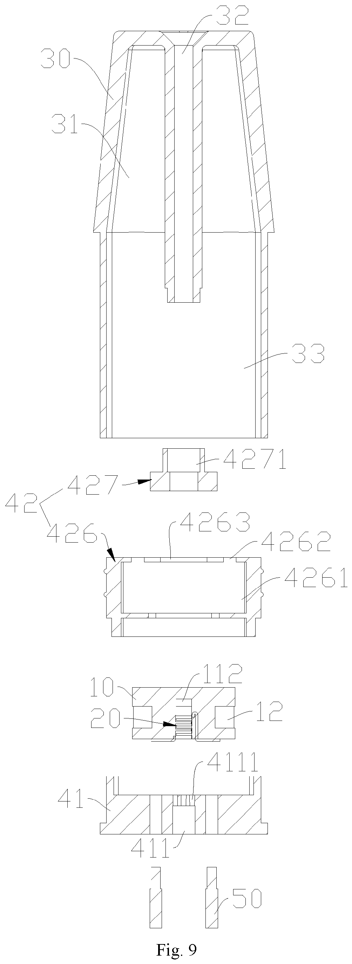

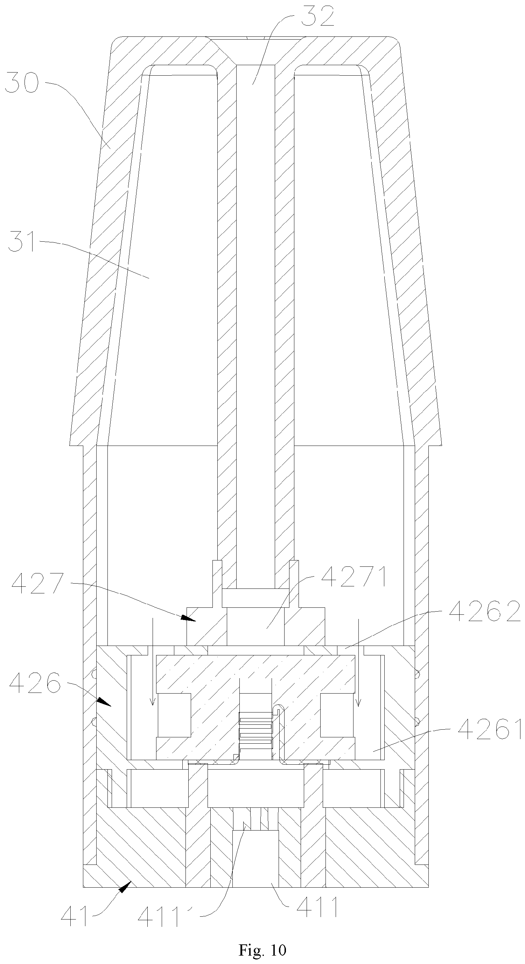

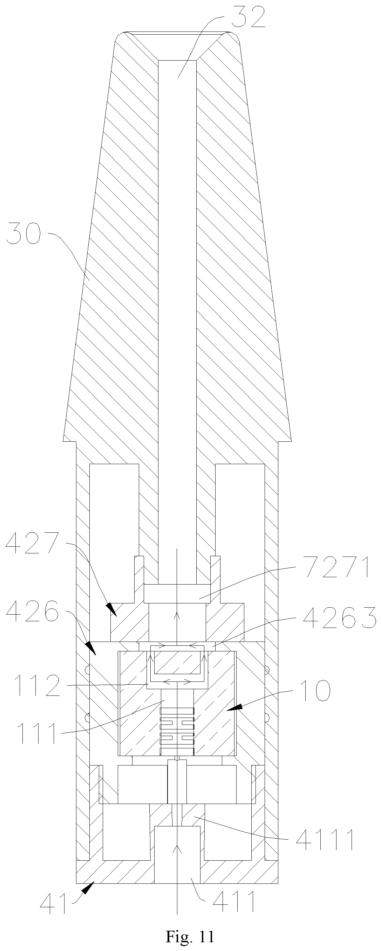

With reference to Fig. 9 to Fig. 11, when the atomizing assembly is the aforementioned lateral side liquid feeding atomizing assembly, the upper bracket 42 specifically includes a third sealing member 426 and a connecting member 427 arranged above the third sealing member 426. The connecting member 427 is clamped between the third sealing member 426 and the suction passage 32 to provide a flow passage for the airflow. In this embodiment, the third sealing member 426 is used to isolate the liquid storage chamber 31 and the atomizing assembly along the circumference. The third sealing member 426 is internally provided with a receiving cavity 4261 for receiving the atomizing body 10, and the atomizing body 10 is arranged in the receiving cavity 4261. The top of the third sealing member 426 is provided with a fourth liquid through hole 4262 communicated to the receiving cavity 4261, and the e-liquid in the liquid storage chamber 31 enters the receiving cavity 4261 through the fourth liquid through hole 4262, so as to enter the liquid inlet groove 12 arranged on the lateral side of the atomizing body 10. In order to ensure that the e-liquid can enter the liquid inlet groove 12 from the lateral side of the atomizing body 10, in this embodiment, the atomizing body 10 and the receiving cavity 4261 are disposed with a gap circumferentially therebetween, that is, a gap is formed between a side wall of the atomizing body 10 and an inner wall of the receiving cavity 4261, and the gap is used to store the e-liquid, so that the e-liquid can enter the liquid inlet groove 12 from the lateral side of the atomizing body 10. Fig. 10 and Fig. 11 respectively show the sectional views under two different sections of the atomizer in this embodiment, wherein the sections in Fig. 10 and Fig. 11 are perpendicular to each other. Furthermore, since the top surface of the atomizing body 10 is abutted against the top surface of the receiving cavity 4261, the top surface of the atomizing body 10 has the risk of blocking the first liquid through hole 4241, in this embodiment, the fourth liquid through hole 4262 is at least partially communicated with the receiving cavity 4261, which may refer to Fig. 10 for details, wherein the arrows in Fig. 10 show the flow path of the e-liquid in this embodiment. As a specific embodiment, the atomizing body 10 is coaxial with the third sealing member 426, and the maximum distance from the periphery of the top surface of the atomizing body 10 to the center of the top surface of the atomizing body 10 is less than the maximum distance from the periphery of the fourth liquid through hole 4262 to the center of the top surface of the third sealing member 426, so that the top surface of the atomizing body 10 will not completely block the fourth liquid through hole 4262, the fourth liquid through hole 4262 is at least partially communicated with the receiving cavity 4261 after the atomizing assembly is assembled, so that the fourth liquid through hole 4262 can be used as a liquid passage to communicate the liquid storage chamber 31 with liquid inlet groove 12, ensuring that the e-liquid can smoothly enter the receiving cavity 4261.

Further, in this embodiment, the second passage 112 of the atomizing assembly is provided with an air outlet 113 on the top surface of the atomizing assembly, and the third sealing member 426 is further provided with a fifth air through hole 4263 disposed corresponding to the air outlet 113. In this embodiment, the connecting member 427 is coaxial with the atomizing body 10 and the third sealing member 426, and is provided with a sixth air through hole 4271 communicating the fifth air through hole 4263 with the suction passage 32 in a penetrating manner. The sixth air through hole 4271 is preferably sleeved at the bottom of the suction passage 32, so that the fifth air through hole 4263 and the sixth air through hole 4271 are communicated to form the air guiding passage. Referring to Fig. 11, the dotted line arrows in Fig. 11 show the flow path of the airflow in the atomizer, the smoke generated by atomizing the e-liquid leaves the atomizing body 10 from the air outlet 113, enters the suction passage 32 through the air guiding passage, and then enters the user's mouth.

In the above two embodiments, the first sealing member 424, the second sealing member 425 and the third sealing member 426 are all made of elastic materials, preferably silicone, rubber or other elastic sealing materials.

Further, in the above two embodiments, the bottom bracket 41 is provided with an air inlet 411 that runs through axially, when the user inhales, the external airflow enters the atomizer through the air inlet 411, and then enters the air passage 11 to start atomization. In some embodiments, the air inlet 411 is coaxial with the first passage 111. In other embodiments, a plurality of the air inlets 411 may be provided and uniformly distributed on the bottom bracket 41 to increase the air flow. Furthermore, the air inlet 411 is further provided therein with a filter grid 4111 for filtering impurities in the external air. Specifically, the filter grid 4111 is honeycomb shaped, that is, is provided with a plurality of through holes, which can block the impurities in the air outside the atomizer during inhalation, so as to prevent the airflow from bringing the impurities into the air passage 11 during inhalation to cause blockage or even damage to the atomizing assembly. The above only describes one specific embodiment of the filter grid 4111, it may be understood that other filter device that can be used to block the impurities in the air may be used as the filter grid 4111 in the present invention.

While the present invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below. Additionally, statements made herein characterizing the present invention refer to an embodiment of the present invention and not necessarily all embodiments.

## Claims

1. An atomizing assembly, comprising an atomizing body (10) made of a porous liquid conducting material;
wherein the atomizing body (10) comprises an air passage (11) configured for airflow to pass through, and a liquid inlet groove (12) configured for storing an e-liquid and feeding the e-liquid;
wherein the air passage (11) at least comprises a first passage (111) communicated with a bottom of the atomizing body (10) and at least one second passage (112) communicated with the first passage (111),
wherein a first included angle is formed between the second passage (112) and the first passage (111), and the first included angle is larger than 0 ° and less than 180 °;
wherein the liquid inlet groove (12) is spaced from the air passage (11); and
wherein the atomizing assembly further comprises a heating member (20) configured for heating and atomizing the e-liquid, and the heating member (20) forms an atomizing area in the first passage (111).

2. The atomizing assembly of claim 1, wherein the first passage (111) is perpendicular to a bottom surface of the atomizing body (10), the first included angle between the second passage (112) and the first passage (111) is 90 °, and the liquid inlet direction of the e-liquid in the liquid inlet groove (12) is perpendicular to the second passage (112).

3. The atomizing assembly of claim 1, wherein the liquid inlet groove (12) is communicated with a lateral surface of the atomizing body (10); or
the liquid inlet groove (12) is communicated with a top surface of the atomizing body (10).

4. The atomizing assembly of claim 3, wherein the liquid inlet groove (12) is in parallel with the first passage (111), and the second passage (112) is communicated with the lateral surface of the atomizing body (10).

5. The atomizing assembly of claim 3, wherein the liquid inlet groove (12) is perpendicular to the first passage (111), and the second passage (112) is communicated with the top surface of the atomizing body (10).

6. The atomizing assembly of claim 5, wherein the second passage (112) comprises at least two airways (1121) that are mutually communicated,
wherein a second included angle is formed between two adjacent airways (1121), and the second included angle is larger than 0 ° and less than 180 °, and
wherein at least one of the airways (1121) is communicated with the top surface of the atomizing body (10).

7. The atomizing assembly of claim 6, wherein the second included angle between the at least two airways (1121) is 90 °.

8. The atomizing assembly of claim 1, wherein the heating member (20) comprises a heating element (21) and a pin (22) electrically connected with the heating element (21),
wherein the heating element (21) is fixed in the first passage (111), and the pin (22) extends from the first passage (111) to the outside of the atomizing body (10).

9. An atomizer, comprising:
the atomizing assembly of any one of claims 1 to 8;
a liquid cup (30); and
a mounting seat (40) configured for positioning the atomizing assembly in the liquid cup (30);
wherein the mounting seat (40) is detachably connected with the liquid cup (30);
wherein the liquid cup (30) comprises a suction passage (32) communicated with the air passage (11), a cavity (33) configured for receiving the atomizing assembly and the mounting seat (40), and a liquid storage chamber (31) configured for storing the e-liquid, and
wherein the suction passage (32) is isolated from the liquid storage chamber (31).

10. The atomizer of claim 9, wherein the mounting seat (40) comprises a bottom bracket (41) and an upper bracket (42),
wherein the atomizing assembly is arranged between the bottom bracket (41) and the upper bracket (42), and
wherein the upper bracket (42) comprises at least one sealing member through which the liquid storage chamber (31) is sealed circumferentially.

11. The atomizer of claim 10, wherein the upper bracket (42) is provided with at least one liquid passage corresponding to the liquid inlet groove (12), and the liquid storage chamber (31) is communicated with the liquid inlet groove (12) through the liquid passage.

12. The atomizer of claim 11, wherein the upper bracket (42) is further provided with at least one air guiding passage for the airflow to pass through, and the air guiding passage communicates the suction passage (32) with the air passage (11).

13. The atomizer of claim 12, wherein the liquid inlet groove (12) is communicated with a top surface of the atomizing body (10),
wherein the upper bracket (42) comprises an upper cover (423) connected with the bottom bracket (41), a first sealing member (424) arranged between the upper cover (423) and the atomizing body (10), and a second sealing member (425) arranged between the upper cover (423) and the liquid cup (30);
wherein the first sealing member (424) is provided with a first liquid through hole (4241) for the e-liquid to pass through, and a first air through hole (4242) for the airflow to pass through,
wherein the first liquid through hole (4241) is communicated with a top surface of the first sealing member (424), and is disposed corresponding to the liquid inlet groove (12); and
wherein the first air through hole (4242) is disposed on a lateral surface of the first sealing member (424), and disposed corresponding to the second passage (112).

14. The atomizer of claim 13, wherein the upper cover (423) is sleeved on the first sealing member (424) and detachably connected with the bottom bracket (41);
wherein the upper cover (423) is provided with a second liquid through hole (4231) corresponding to the first liquid through hole (4241), and the second liquid through hole (4231) penetrates the upper cover (423) along the axial direction;
wherein the upper cover (423) is further provided with a second air through hole (4232) corresponding to the first air through hole (4242), and a third air through hole (4233) arranged above the second air through hole (4232) and coaxial with the suction passage (32), and
wherein one end of the third air through hole (4233) is communicated with the top surface of the upper cover (423), and another end of the third air through hole (4233) is communicated with a lateral surface of the upper cover (423), and the airflow enters the third air through hole (4233) along the lateral surface of the upper cover (423) from the second air through hole (4232).

15. The atomizer of claim 14, wherein the second sealing member (425) is provided with a third liquid through hole (4251) corresponding to the second liquid through hole (4231),
wherein the first liquid through hole (4241), the second liquid through hole (4231) and the third liquid through hole (4251) are communicated to form the liquid passage communicating the liquid storage chamber (31) and the liquid inlet groove (12);
wherein the second sealing member (425) is further provided with a fourth air through hole (4252) corresponding to the suction passage (32), and
wherein the first air through hole (4242), the second air through hole (4232), the third air through hole (4233) and the fourth air through hole (4252) are communicated to form the air guiding passage communicating the suction passage (32) and the air passage (11).

16. The atomizer of claim 12, wherein the liquid inlet groove (12) is communicated with the lateral surface of the atomizing body (10),
wherein the upper bracket (42) comprises a third sealing member (426) and a connecting member (427) disposed between the third sealing member (426) and the suction passage (32);
wherein the third sealing member (426) is provided therein with a receiving cavity (4261) configured for receiving the atomizing body (10), and the atomizing body (10) is arranged in the receiving cavity (4261) with a gap therebetween in the circumferential direction;
wherein a top of the third sealing member (426) is provided with a fourth liquid through hole (4262) communicated to the receiving cavity (4261), and a fifth air through hole (4263) corresponding to the second passage (112), and
wherein the connecting member (427) is further provided with a sixth air through hole (4271) communicating the suction passage (32) and the fifth air through hole (4263).

17. The atomizer of claim 16, wherein the atomizing body (10) is abutted against a top of the receiving cavity (4261), and the fourth liquid through hole (4262) is at least partially communicated with the receiving cavity (4261).

18. The atomizer of claim 16, wherein the sixth air through hole (4271) is coaxially sleeved at a bottom of the suction passage (32) and communicated with the fifth air through hole (4263), and
wherein the fifth air through hole (4263) and the sixth air through hole (4271) are communicated to form the air guiding passage communicating the air passage (11) and the suction passage (32).

19. The atomizer of claim 9, wherein the atomizer further comprises an electrode column (50) electrically connected with the heating member (20), and the end of the electrode column (50) that is away from the heating member (20) penetrates the bottom bracket (41) and is exposed to the bottom surface of the bottom bracket (41).

20. The atomizer of claim 9, wherein the bottom bracket (41) is further provided with an air inlet (411) that allows the airflow to enter the atomizer, and the air inlet (411) penetrates the bottom bracket (41) along the axial direction.

21. The atomizer of claim 20, wherein the air inlet (411) is further provided with a filter grid (4111) for filtering impurities in the air, and the filter grid (4111) comprises a plurality of through holes arranged along the axial direction.
